# EUROPEAN PATENT SPECIFICATION

(11) **EP 4 500 119 B1**
(45) Date of publication and mention of the grant of the patent: **11.03.2026**
(21) Application number: 23719102.8
(22) Date of filing: 23.03.2023
(51) Int. Cl.: C21C 5/46, C21C 5/52, G01G 3/12, F27B 3/28, G01G 21/23, F27D 19/00, F27D 21/00

(54) **WEIGHING DEVICE, AUTOMATIC SYSTEM TO CONTROL THE FEED OF CHARGE MATERIAL INTO A FURNACE, APPARATUS THAT USES THE SYSTEM AND CORRESPONDING METHOD**
WÄGEVORRICHTUNG, AUTOMATISCHES SYSTEM ZUR STEUERUNG DER ZUFUHR VON BESCHICKUNGSMATERIAL IN EINEN OFEN, VORRICHTUNG MIT DEM SYSTEM UND ZUGEHÖRIGES VERFAHREN
DISPOSITIF DE PESAGE, SYSTÈME AUTOMATIQUE DE COMMANDE D'ALIMENTATION DE FOUR EN MATÉRIAU DE CHARGE, APPAREIL UTILISANT LE SYSTÈME ET PROCÉDÉ CORRESPONDANT

(30) Priority: 25.03.2022 IT 202200005909
(43) Date of publication of application: 05.02.2025
(73) Proprietor: DANIELI & C. OFFICINE MECCANICHE S.P.A., 33042 Buttrio (UD) (IT)
(72) Inventor: RIGA, Enrico, 33100 UDINE (IT); SCOTTI, Franco, 34074 MONFALCONE (GO) (IT)
(74) Representative: Petraz, Davide Luigi
(86) International application number: PCT/IT2023/050090
(87) International publication number: WO 2023/181088

(56) References cited:
- WO-A1-03/087688
- JP-B2- 3 679 225

## Description

### FIELD OF THE INVENTION

Embodiments described here concern a weighing device, an automatic system to control the feed of charge material into a melting furnace that uses said weighing device, an apparatus using said system, and a method to control the feed of a charge of a melting furnace that uses the apparatus.

The weighing device object of the present invention is used to measure the weight of a furnace, its content and every element installed in or on said furnace, in particular, but not only, during the progressive feed of charge material inside a melting furnace with a continuous charge system.

The control system is used to control the operating parameters in a melting furnace for a metal charge, using information and signals which come from said weighing device associated with the furnace itself.

In a preferential but non-restrictive manner, the device, the control system, the apparatus and the method can be applied in the iron and steel sector for the production of steel or other metals, or in the production of glass materials, in which there are, for example, electric arc furnaces, ladles, submerged arc furnaces, melting or refining furnaces, induction melting furnaces or induction heating furnaces or suchlike.

### BACKGROUND OF THE INVENTION

Plants are known for transforming and melting metal materials, which comprise an electric arc furnace disposed to cooperate with a system to feed charge material, which can be of the continuous type, for example with a conveyor belt, or of the discontinuous type, for example with baskets. The electric furnace has at least one container, or shell, and a covering roof. Electrodes are introduced through holes in the roof so as to initiate and maintain the melting of the charge material.

It is also known to use weighing systems, of the direct or indirect type, the latter for example based on the measurement of the level of the liquid bath, to obtain information which is then used in controlling the operating parameters of the operation of the furnace.

Systems are known in which the furnace is periodically weighed to detect the quantity of steel present in the furnace, in which the temperature of the liquid bath is also measured substantially continuously, and in which the unloading rate of the charge material into the furnace is detected by weighing, and is regulated so that the temperature of the liquid bath being formed is constantly maintained around a desired and predetermined value.

Systems and methods are also known which use measured values of the weight of a furnace and of the charge material introduced into the furnace in order to determine the speed of feed of a charge into the furnace.

Furthermore, systems are also known in which the devices for weighing the furnace also function as supports for the furnace or for a structure which supports the furnace.

One disadvantage of the state of the art is that such weighing devices must be able to withstand considerable weights and must therefore be able to withstand considerable mechanical stresses.

Another disadvantage of the state of the art is that, because of the weights and mechanical stresses, the weighing devices can supply data having unsatisfactory precision.

Document JPH10325751 A describes a weighing device with load cells that can be used in food plants, water treatment plants or tanks.

One purpose of the invention is therefore to provide an optimized device, system, apparatus and method to improve the weight measurement obtained and to make it more reliable and precise.

Another purpose of the invention is to make controlling the charge of a furnace more efficient, optimizing the energy contribution supplied inside the furnace.

Another purpose of the invention is to improve control of the level of molten metal inside a furnace.

A further purpose of the invention is to improve the quality of a bath of molten metal inside a furnace.

Another purpose of the invention is to increase the mechanical stability of the furnace itself in all the steps of the melting cycle.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. Other innovative characteristics of the invention are set forth in the dependent claims.

The invention concerns a weighing device, a control system, an apparatus and method to control the melting process in an electric furnace.

According to one characteristic of the invention, a weighing device for charge material fed into a melting furnace comprises a plurality of supports, each comprising an upper plate, a lower plate, disposed parallel to each other during use, and a weighing element in contact with and disposed intermediate between the two plates.

At least one of the weighing elements is a column load cell and each support comprises two connection elements perpendicular to each other and lying on a plane parallel to the one defined by the upper and lower plates, each having a tie rod connected to at least one upper terminal for connection to the upper plate and at least one lower terminal for connection to the lower plate.

A preferential solution of the invention provides that the upper plate is configured to contact the furnace, and that the lower plate is configured to contact and be attached to a horizontally pivoting platform which supports the furnace.

According to the invention, the upper plate is located in sliding contact with respect to the lateral wall or the lower wall of the furnace, for example with respect to the lower wall of a shell of the furnace. Similarly, the lower plate is attached by welding or anchored in any other manner to the upper surface of the horizontally pivoting platform on which the furnace rests.

The supports are at least three in number, even more advantageously four, and distributed on the periphery of the bottom of the shell.

The weighing elements are disposed in such a way as to be compressed with each variation in weight of the furnace, for example deriving from the receipt of a quantity of charge material, in the form of scrap metal, briquettes, sponge iron or mixtures thereof, or from the tapping of molten material.

Due to its configuration and its positioning stabilized by the presence of the connection elements, which put the support element in contact with the furnace on one side and with the horizontally pivoting platform on the other, the weighing element according to the invention is capable of registering the weight variation value with remarkable precision and sensitivity.

Each weighing element works as a rod which is put under compression on the basis of the weight variation, which therefore determines a relative movement between the furnace and the horizontally pivoting support platform.

The presence of a plurality of supports suitably distributed, advantageously uniformly and/or symmetrically, on the periphery of the base of the furnace allows to obtain a corresponding number of values which can be compared with each other in order to obtain information, as well as on the weight of the unloaded material, also on its distribution inside the furnace itself. In this way, it can also be possible to manage the operation of the unloading means in order to prevent localized accumulations and/or non-optimal distributions of the charge material unloaded inside the furnace.

One solution of the invention provides that a processing unit receives the information relating to the plurality of weight values detected by the individual weighing elements, processes them, and consequently conditions the unloading speed of the charge material inside the furnace, in particular in the case of continuous unloading by means of a belt or suchlike.

Moreover, thanks to the information on localized variations in weight, it is also possible to reduce the risk that the material unloaded into the furnace hits and damages structural and auxiliary elements present at least partly inside the furnace, such as electrodes, burners, lances, tuyeres or other.

These auxiliary elements have, in particular, the function of delivering additional power to the furnace, for example of the chemical type, in addition to the electric power delivered by means of the electrodes.

The weighing elements thus configured, according to another characteristic of the invention, can self-adapt in the event of misalignments of the base of the furnace, of the supports and/or of the rest platform.

The levelling of the furnace can be achieved by using tie rods associated with motorized adjustment means governed by an automatic control system.

According to another example of the invention, each support comprises a cooling shell to control the temperature of an associated weighing element.

According to another example of the invention, the cooling shell is a hollow cylindrical shell which at least partly surrounds the central rod in which a cooling liquid is made to circulate, which is introduced into the cooling shell by means of an inlet nozzle and extracted from the cooling shell by means of an outlet nozzle.

According to yet another example of the invention, the at least one column-type weighing element comprises a central rod configured to support at least part of the weight of the furnace, of its content, and of every element installed in or on the furnace.

According to another example of the invention, the central rod comprises at least two deformation sensors.

According to another example of the invention, the central rod is attached to the lower plate in a removable or non-removable manner.

Another aspect of the invention provides an automatic system to control the feed of charge material into an electric arc furnace comprising a weighing device of the type described above, wherein the supports are interposed between the furnace and a horizontally pivoting platform, and a processing unit configured to control the quantity of charge material, on the basis of the information on the weight generated by the weighing device, with which to feed the furnace on the basis of a value of energy supplied to a bath.

In one example of the invention, the value of energy supplied to the bath corresponds to a value of electric power supplied to electrodes during a melting sequence together with a value of chemical power supplied by the auxiliary devices.

In this way, the incremental quantity of charge material introduced into the furnace is always correctly correlated to the overall quantity of energy delivered into the furnace.

Another aspect of the invention provides an apparatus comprising an electric arc furnace which comprises the automatic system to control the feed of charge material into the furnace as above.

Another aspect of the invention provides a method to control the feed of charge material into an electric arc furnace during a melting sequence to be carried out with an automatic control system. The method comprises the step of determining, at different instants of time, a plurality of values of weight of the furnace, of its content, and of every element installed in or on the furnace by means of the weighing elements; the step of obtaining, by means of the processing unit, a value of total energy supplied to the bath; the step of controlling, on the basis of the total energy value and the weight values, by means of the processing unit, the quantity of charge material to be introduced into the furnace by means of a transport element of the charge material.

In one example of the invention, the method comprises the step of obtaining the total energy value on the basis of a value of electric power supplied to the electrodes and of a value of chemical power supplied by the auxiliary devices.

In another example of the invention, the method comprises the step of regulating, by means of the processing unit, a speed of a transport mean of the charge material, on the basis of the weight value given by the weighing device and on the basis of the value of total energy delivered inside the furnace.

An advantage of this device, system, apparatus and method is that the operations to control the feed of an electric arc furnace are performed automatically, on the basis of extremely precise weight values, thanks to the structure and configuration of the weighing device.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 shows an apparatus used to control the feed of an electric arc furnace comprising said furnace, platforms for supporting the furnace, and systems for measuring the weight of the furnace and for feeding the charge material;
- fig. 2 shows a projection of a support of an electric arc furnace;
- fig. 3 shows a partly exploded three-dimensional view of a support of an electric arc furnace;
- fig. 4 shows a section of a weighing element comprised in the support of an electric arc furnace;
- fig. 5 shows a simplified diagram of a processing unit of an apparatus comprising an electric arc furnace.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

We will now refer in detail to possible embodiments of the invention, of which one or more examples are shown in the attached drawings, by way of a non-limiting illustration. The phraseology and terminology used here is also for the purposes of providing non-limiting examples.

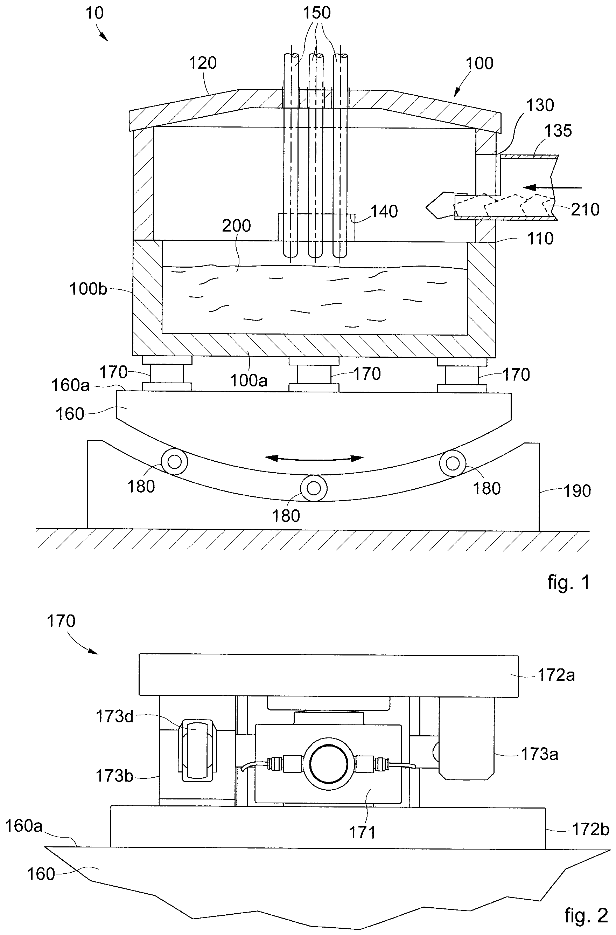

With reference to fig. 1, the embodiments described here concern an apparatus 10 comprising a furnace 100, in this specific case of the electric arc type, which comprises a shell 110 for containing charge material 210 to be melted and/or molten metal charge, a covering roof 120, an inlet channel 130 through which the charge material 210 is inserted into the furnace 100, and a slagging channel 140 which allows the slag to exit at the end of the melting process. The furnace also comprises, normally on the bottom of the shell 110, a known tapping aperture, called EBT, not shown in the drawings.

The furnace 100 is also provided with one or more electrodes 150 inserted into the furnace 100 through the covering roof 120 and configured to deliver energy to melt the charge material 210 in the shell 110 (furnace 100) and obtain a molten metal charge, or bath 200, through the generation of electric arcs, between a plurality of electrodes 150 if the furnace is powered with AC, or with the bottom of the shell in the case of a furnace powered with DC.

The one or more electrodes 150 are installed removable on the furnace 100 and can be inserted into the furnace 100 or extracted from the furnace 100 according to process requirements and/or in order to prevent damage to the one or more electrodes 150 or to the furnace 100. The one or more electrodes 150 are connected to an electric power supply system, not shown in the drawings. The one or more electrodes 150 and the electric power supply system can be electrically connected or disconnected on the basis of the processing steps, or on the basis of safety considerations during the steps of loading charge material 210, unloading molten metal charge, slag removal or tapping.

The electric power supplied to the electrodes 150 can vary as a function of time, starting from a minimum power and reaching the operating power by increasing the power supplied to the one or more electrodes 150 as a function of the quantity of charge material 210 and/or bath 200 present in the furnace 100.

The furnace 100 is also provided with auxiliary elements such as burners, oxygen lances, pulverized coal injectors and similar elements, not shown, able to promote the melting processes in the furnace 100 by supplying additional energy, mainly deriving from reactions of the chemical type.

The apparatus 10 also comprises a horizontally pivoting platform 160, movement elements 180 which allow the horizontally pivoting platform 160 to tilt, and a weighing system or device which comprises a plurality of supports 170 interposed between the horizontally pivoting platform 160 and the furnace 100.

In fig. 1, the movement elements 180 are shown as rollers interposed between the horizontally pivoting platform 160 and a base platform 190 which rests on the ground. The person of skill in the art will understand that the movement elements 180 can consist of any element whatsoever that allows the horizontally pivoting platform 160 to tilt at a certain angle with respect to the horizontal direction, and that they are not limited to the rollers shown in fig. 1.

The furnace 100 is mechanically connected to the horizontally pivoting platform 160 by means of the supports 170, whereby each inclination of the horizontally pivoting platform 160 generates an inclination of the furnace 100.

During the operation of the furnace, that is, during a melting sequence, the horizontally pivoting platform 160, and therefore the furnace 100, are made to oscillate by the movement means 180, by an angle generally comprised between -5 and +5 degrees with respect to the horizontal.

Optionally, during the slag removal step, the movement means 180 are configured to make the horizontally pivoting platform 160, and therefore the furnace 100, tilt by an angle generally comprised between -1 and -15 degrees with respect to the horizontal.

Optionally, during the tapping step, the movement means 180 are configured to make the horizontally pivoting platform 160, and therefore the furnace 100, tilt by an angle generally comprised between +5 and +20 degrees with respect to the horizontal.

If the loading of charge material 210 is a discontinuous process, for example when the charge material 210 is unloaded into the furnace 100 by means of one or more baskets, the roof 120 is at least partly open or removed, and the electrodes 150 are removed and disconnected from the electric power supply.

The loading of charge material 210 can also occur with a continuous process by means of a transport mean 135 configured to continuously unload charge material 210 into the furnace 100, such as a conveyor belt positioned, for example, in a preheating tunnel.

The continuous and discontinuous types of process for loading the charge material 210 into the furnace 100 can also be combined in sequence or in parallel. In particular, the discontinuous loading type of process can be used to start the melting sequence and can be replaced, during the melting sequence, by the continuous loading process, on the basis of considerations relating to the temperature inside the furnace 100 or to the electric power supplied to the electrodes 150, or on the basis of considerations on the total energy supplied to the charge material 210 or to the bath 200 present in the furnace 100.

In the event of such a continuous loading process, the charge material 210 is continuously unloaded into the furnace 100 even during a melting sequence and can only be interrupted during the slag removal step or during the tapping of the molten material.

In the present invention, the furnace 100 rests on the horizontally pivoting platform 160 by means of a weighing device comprising a plurality of supports 170 disposed along the lower periphery of the furnace 100, or of the shell 110, and which are interposed between the furnace 100 and the horizontally pivoting platform 160. The furnace 100 is substantially resting on the supports 170 and unloads its weight on the horizontally pivoting platform 160 exclusively by means of the supports 170. Preferably, the number of supports 170 is at least three. The person of skill in the art will understand that the number of supports is not limited to what is shown in fig. 1 and that the invention can comprise more than three supports, without this compromising the field of protection.

Each of the supports 170 comprises one or more weighing elements 171 and two connection elements 173 which allow to mechanically connect the furnace 100 to the horizontally pivoting platform 160. At least one of the weighing elements 171 is a column load cell comprising a central rod 171a which supports the weight of the furnace, of its content, and of every element installed in or on the furnace 100.

The central rod 171a comprises at least two deformation sensors (not shown in the drawings) which allow to detect the deformation of the central rod 171a which is caused by compressions along a vertical axis, or with components along a vertical axis, in other words caused by a variation in weight which acts on the rod 171a.

Optionally, the temperature of each of the one or more weighing elements 171 is controlled by a cooling shell 177.

The two connection elements 173 are perpendicular to each other in order to constrain the movement of the furnace 100 and the horizontally pivoting platform 160 on two axes.

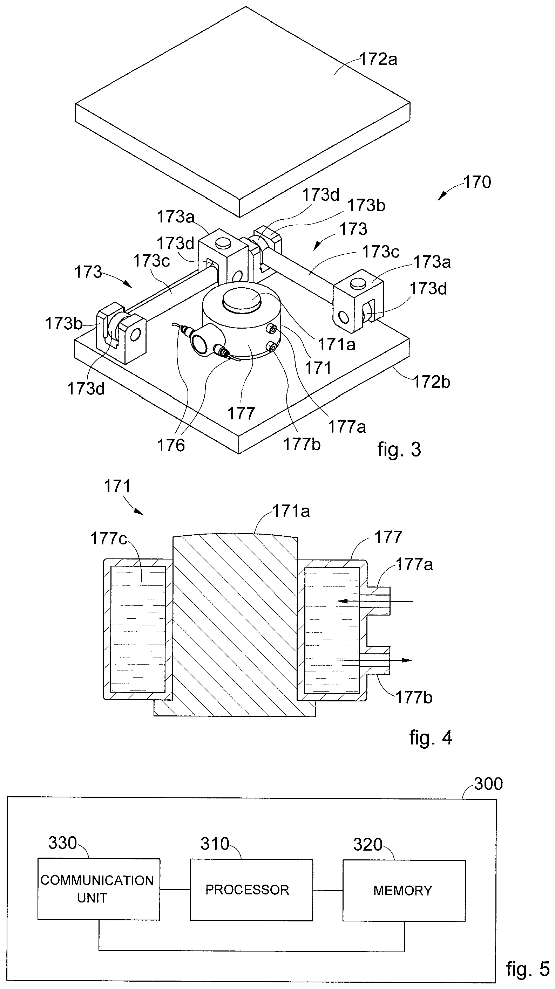

In an example of the invention shown in figs. 2 and 3, each support 170 comprises a weighing element 171 interposed between an upper plate 172a and a lower plate 172b. The upper plate 172a of the support 170 is configured to contact a lower surface 100a of the furnace 100, while the lower plate 172b is configured to contact an upper surface 160a of the horizontally pivoting platform 160.

The person of skill in the art will understand that the upper plate 172a of the supports 170 can also contact a lateral surface 100b of the furnace 100 or, in the same way, of the shell 110.

The attachment of the lower plate 172b of the supports 170 to the upper surface 160a of the horizontally pivoting platform 160 can occur by means of attachment means, or it can be non-removable, for example by welding.

In figs. 1, 2 and 3, the upper plate 172a and the lower plate 172b are shown as flat plates. The upper 172a and lower plate 172b are disposed, during use, substantially parallel to each other. The person of skill in the art will understand that the upper 172a and lower plate 172b can have any shape whatsoever such as to adapt to the shape of the lower 100a and/or lateral surface 100b of the furnace 100 and to the upper surface 160a of the platform 160, respectively.

In the case of a non-planar shape of the plates 172a, 172b, the condition of parallelism during use will in any case be maintained, at least partly, due to their shape.

The weighing element 171 of the supports 170 is comprised between the upper plate 172a and the lower plate 172b, which are connected to each other by means of two connection elements 173. The two connection elements 173 are disposed perpendicular to each other and lie on a plane substantially parallel to the one defined by the upper 172a and lower plate 172b. Each connection element 173 comprises a tie rod 173c, an upper terminal 173a and a lower terminal 173b located at the ends of the tie rod 173c.

The upper terminal 173a is configured to mechanically connect only to the upper plate 172a, and the lower terminal 173b is configured to mechanically connect only to the lower plate 172b. In other words, the tie rod 173c is mechanically connected to the upper plate 172a by means of the upper terminal 173a and to the lower plate 172b by means of the lower terminal 173b.

The mechanical connection between the tie rod 173c and the upper terminal 173a and lower terminal 173b is guaranteed by joining elements 173d, such as joints, hinges, pins, etc. The person of skill in the art will understand that any joining element able to mechanically connect two mechanical elements and configured to allow a relative movement between such two elements can be used in the present invention as a joining element 173d.

The upper terminal 173a and the lower terminal 173b can be mechanically connected to the upper plate 172a and to the lower plate 172b, respectively, by means of threaded attachment elements (not shown in the drawings). Optionally, the upper 173a and lower terminal 173b are attached to the respective plates in a non-removable manner by welding, for example.

The two connection elements 173 are positioned perpendicular to each other, so as to constrain the relative movement between the upper plate 172a and the lower plate 172b on two axes. This disposition of the two connection elements 173 also allows to limit the movements of the furnace 100 along said two axes, so as to absorb or eliminate shear forces along the two axes.

Moreover, the connection elements 173 can be used to align and/or to level the furnace 100, or equivalently the shell 110, with respect to a predetermined position. These adjustments, alignment and/or leveling of the furnace 100 are obtained by means of common operations of lengthening or shortening the length of the tie rods 173c of the connection elements 173.

The weighing element 171 is interposed between the furnace 100 and the horizontally pivoting platform 160 and exclusively supports, that is, exclusively measures, the weight of the upper plate 172a, of the furnace 100, of the content of the furnace 100, and of every element installed in or on the furnace 100, such as the electrodes 150, when these are installed and act with their weight on the furnace 100.

The weight of the upper plate 172a is several orders of magnitude less than the weight of the furnace 100 and any other item weighed. For this reason, it is justifiable to ignore this value in any calculation involving a weight value detected by the weighing elements 171.

The person of skill in the art will understand that, with the same elements installed in or on the furnace 100, the difference between two weighing values of the furnace 100 can give an indication of the variation in the content of the furnace, that is, whether any charge material 210 has been introduced into the furnace and/or if the bath 200 has been at least partly extracted from the furnace 100, for example by tapping.

Optionally, each support of the plurality of supports 170 comprises the same type of weighing elements 171. In another example, at least one support 170 of the plurality of supports comprises a weighing element 171 consisting of a column load cell comprising a central rod 171a connected, preferably in a non-removable manner, to the lower plate 172b and configured to support the weight of the furnace 100, of its content, and of every element installed in or on the furnace 100.

The rod 171a comprises, as mentioned, at least two deformation sensors, not shown in the drawings, optionally perpendicular to each other, able to measure the deformation undergone by the rod 171a under the influence of the weight of the furnace 100, of its content, and of every element installed in or on the furnace 100. Optionally, the rod 171a comprises four deformation sensors perpendicular to each other in pairs and electrically configured in such a way as to create a Wheatstone bridge.

The at least two deformation sensors generate an electric signal on the basis of the deformation caused by the load (weight) that acts on the rod 171a. The electric signal generated by the deformation sensors is transmitted to a processing unit 300 (shown only in fig. 5) to process the measured values. The processing unit comprises at least a processor 310, a memory 320 and a communication unit 330 for receiving/transmitting electrical signals from/to the outside, that is, from elements of the furnace 100 or from control units (not shown in the drawings) able to be operated by an operator. The processor 310, memory 320 and communication unit 330 are connected and can communicate with each other by means of physical support or wirelessly.

Hereafter we will refer to the processing unit 300 without specifying which element performs the individual functions described, this being considered common practice. Furthermore, the processing unit 300 can control the electric power supply of the electrodes 150. Alternatively, the electric power supply of the electrodes 150 is controlled by an electric power supply unit, not shown in the drawings, optionally connected to the processing unit 300.

In one example of the invention, the electric signal is conveyed to the processing unit 300 by means of at least one electric cable 176. In another example of the invention, the electric signal is processed and sent to the processing unit 300 by means of wireless connection. In another example of the invention, the electric signal generated by the deformation sensors is pre-processed by a processing unit (not shown in the drawings) installed in proximity to the load cell and the pre-processed signal is transmitted to the processing unit by means of physical medium, cable, wire, etc., or in wireless mode.

Optionally, the processing unit 300 receives a single signal resulting from the processing of a plurality of signals originating from each deformation sensor. In another example, the processing unit 300 receives as many electric signals, directly generated by the deformation sensors or previously processed, as there are deformation sensors.

The weighing element 171 works under compression by detecting the deformation of the rod 171a proportional to the load that rests on the weighing element 171. In this way, the weighing element 171 allows to monitor the weight of the furnace 100, of its content, and of every element present or installed in or on the furnace 100 in real time.

The supports 170 are mounted in proximity to the furnace 100 and, for this reason, are subject to the high temperatures generated by the melting of the charge material 210 or by the bath 200. In order to prevent the deformation sensors present on the rod 171a from malfunctioning or being affected by any effects caused by high temperatures, the weighing elements 171 are provided with a cooling system comprising a cooling shell 177 which at least partly surrounds the rod 171a.

The cooling shell 177 is substantially a hollow cylindrical shell, or a part thereof. A cooling liquid 177c, optionally water, is made to circulate inside the cooling shell 177, allowing to control the temperature of the rod 171a. The cooling liquid is introduced into the cooling shell through an inlet nozzle 177a and is extracted from the cooling shell 177 through an outlet nozzle 177b. The inlet nozzle 177a and the outlet nozzle 177b are formed on the external surface of the cooling shell 177 and each allows the connection with a conduit (not shown in the drawings) which allows the entry and the extraction of the cooling liquid, respectively.

The cooling liquid 177c extracted from the cooling shell 177 by means of the outlet nozzle 177b is cooled by a cooling unit, not shown in the drawings, and reintroduced into the cooling shell 177 at the suitable temperature by means of the inlet nozzle 177a. Optionally, each cooling shell 177 is connected to a cooling unit. Alternatively, the cooling shells 177 of all weighing elements 171 are connected to a single cooling unit.

Controlling the temperature of the weighing elements 171 allows to eliminate or minimize the effects of the temperature on the measurement of the weight of the furnace 100, of its content and of every element installed in or on the furnace 100.

The data relating to the weight of the furnace 100, of its content, and of every element installed on or in it are used by the processing unit 300 to determine the quantity of charge material 210 to be introduced into the furnace 100. The charge material 210 is transported and introduced into the furnace thanks to a transport mean 135 which transports the charge material 210 from the outside of the furnace 100 to the inlet channel 130, and then inside the furnace 100. By way of example, the transport mean 135 can be a conveyor belt; however, the person of skill in the art will understand that any movement mean able to introduce the charge material 210 into the furnace 100 can be used without compromising the purpose of the present invention.

The transport mean 135 is connected to the processing unit 300 which controls its movement, and therefore the introduction of charge material 210 inside the furnace, on the basis of commands pre-set by an operator or pre-recorded in a memory of the processing unit 300. In one example of the invention, the processing unit 300 controls the movement of the transport mean 135 on the basis of data received from sensors, such as for example the deformation sensors of the weighing elements 171 or temperature detection sensors (not shown in the drawings) which measure temperature values inside the furnace and/or of its content, and/or on the basis of operating parameters such as, for example, the electric power supplied to the electrodes 150.

In one example of the invention, at least one of the following values detected by sensors, not shown in the drawings, such as a temperature value of the interior and/or of the content of the furnace 100, a chemical substances detection sensor value, a pressure value, a value of electric power supplied to the electrodes 150, a value of chemical power deriving from reactions that occur inside the furnace, is used to obtain a value of total energy supplied to the charge material 210 or to the bath 200 present in the furnace 100.

Optionally, the value of total energy supplied to the charge material 210 or to the bath 200 contemplates both the value of the electric power supplied to the electrodes 150 and also the chemical power generated by the reactions caused by the introduction of solid and gaseous substances by means of the auxiliary elements as above.

In another example of the invention, the total energy value obtained from the processing unit 300 is combined with the weight value measured by at least one of the plurality of weighing elements 171 and transmitted to the processing unit 300 to determine how to adjust the quantity of charge material 210 to be introduced into the furnace 100 on the basis of the power delivered inside the furnace.

To control the quantity of charge material 210 to be introduced into the furnace 100, the processing unit 300 controls the transport mean 135 in order to supply additional charge material 210 or to stop/slow down the introduction of the charge material 210 into the furnace 100.

Moreover, the disposition of the at least three supports 170 along the periphery of the furnace 100 allows to identify the distribution of the weight of the charge material 210 inside the furnace 100. In this case, the weight values detected by the weighing elements 171 of the supports 170 are processed by the processing unit 300 in order to determine a geometric distribution of the weight of the content of the furnace 100. The processing unit 300 can determine this geometric distribution also on the basis of data relating to the inclination of the furnace 100 with respect to the horizontal, taking into account the displacement of the content of the furnace 100 when the furnace 100 is tilted by the horizontally pivoting platform 160.

In one example of the invention, the datum relating to the distribution of the weight of the charge material is used, alone or in combination with the previously described data, by the processing unit 300 to determine not only the quantity of charge material 210 with which to feed the furnace 100 but also the distribution of the charge material 210 and/or of the bath 200 inside the furnace 100.

Optionally, the processing unit 300 controls, on the basis of the datum on the distribution of the charge material 210, the direction in which the charge material 210 is unloaded by the transport mean 135.

The use, by the processing unit 300, of the datum concerning the distribution of the weight of the charge material 210 allows to prevent non-optimal accumulations and/or distributions of charge material 210 which can affect the melting efficiency, that is, the quantity of energy to be used to melt the charge material 210 and/or to maintain or complete the melting of the bath 200, and the time required to achieve a melting of the charge material 210. Furthermore, this allows to prevent the charge material 210 from being erroneously positioned in the furnace 100 or coming into contact or colliding with damageable structures and/or elements which are installed inside the furnace, such as for example electrodes 150, burners, lances, tuyeres, and suchlike.

Optionally, the weighing of the furnace 100 and of its content and of every element installed in or on the furnace 100 is repeated over time at regular intervals. By studying the trend of the weight values measured at different instants of time, it is possible to obtain an indication of the quantity of bath 200 present in the furnace.

Assuming the weight of the furnace 100 and the weight of every element installed in or on the furnace 100 to be values that do not vary over time, the difference between the weight values obtained from the weighing elements 171 depends exclusively on how much charge material 210 has been introduced into the furnace, or by how much bath 200 has been extracted from the furnace 100. This is particularly true for weighings performed in short time intervals with respect to a period of time in which the furnace 100 can be used continuously without performing recovery or maintenance operations thereon.

Over longer periods of time, the difference between two weighing values of the furnace 100, of its content, and of every element installed in or on the furnace 100 can supply data relating to the wear of the furnace 100, in particular relating to the wear of the internal walls of the furnace 100 or, similarly, related to the presence of accumulated slag. This allows to determine the start of, among others, said recovery or maintenance processes.

According to what described heretofore, the processing unit 300 and the supports 170 constitute an automatic system to control and determine the loading of charge material 210 with which to feed the furnace 100.

In the following claims, the sole purpose of the references in brackets is to facilitate reading and they must not be considered as restrictive factors with regard to the field of protection claimed in the specific claims.

## Claims

1. Weighing device configured to weigh charge material (210) fed into an electric arc furnace (100) resting on a horizontally pivoting platform (160), said weighing device comprising a plurality of supports (170), each comprising an upper plate (172a), a lower plate (172b), which are disposed parallel to each other during use, and a weighing element (171) in contact with and disposed intermediate between said two plates (172a, 172b), wherein said weighing element (171) is a column load cell, **and characterized in that** each support (170) comprises two connection elements (173) perpendicular to each other and lying on plane parallel to the one defined by said upper (172a) and lower plate (172b), each having a tie rod (173c) connected to at least one upper terminal (173a) for connection to the upper plate (172a) and to at least one lower terminal (173b) for connection to the lower plate (172b).

2. Weighing device as in claim 1, **characterized in that** said upper plate (172a) is configured to contact said furnace (100), and said lower plate (172b) is configured to contact said horizontally pivoting platform (160) supporting said furnace.

3. Weighing device as in claim 1 or 2, **characterized in that** it comprises at least three supports (170) uniformly distributed with respect to each other.

4. Weighing device as in any claim hereinbefore, **characterized in that** each support (170) comprises a cooling shell (177) to control the temperature of an associated weighing element (171).

5. Weighing device as in any claim hereinbefore, **characterized in that** said at least one weighing element (171) comprises a central rod (171a) configured to support at least a part of the weight of said furnace (100), of its content, and of every element installed in or on said furnace (100).

6. Weighing device as in claim 5, **characterized in that** said central rod (171a) comprises at least two deformation sensors.

7. Weighing device as in claim 5 or 6, **characterized in that** said central rod (171a) is attached to said lower plate (172b).

8. Weighing device as in claim 5 when dependent on claim 4, **characterized in that** said cooling shell (177) is a hollow cylindrical shell which at least partly surrounds said central rod (171a) and in which a cooling liquid (177c) is made to circulate, which is introduced into said cooling shell (177) by means of an inlet nozzle (177a) and extracted from said cooling shell (177) by means of an outlet nozzle (177b).

9. Automatic system to control the feed of charge material (210) into an electric arc furnace (100) comprising electrodes (150), **characterized in that** it comprises:
- a weighing device as in any claim hereinbefore, configured to weigh said furnace (100), its content, and every element installed in or on said furnace (100), wherein the supports (170) of said plurality of supports (170) are interposed between said furnace (100) and a horizontally pivoting platform (160);
- a processing unit (300) configured to control the quantity of charge material (210) with which to feed said furnace (100), on the basis of the information received from said weighing device, as a function of a value of energy delivered inside the furnace.

10. Automatic system as in claim 9, **characterized in that** said value of energy delivered inside the furnace (100) corresponds to the combination between a value of electric power supplied to said electrodes (150) and a value of chemical power supplied to a bath (200) of molten metal charge and generated by auxiliary elements, such as electrodes, burners, lances or tuyeres, during a melting sequence.

11. Apparatus (10) comprising an electric arc furnace (100), **characterized in that** it comprises an automatic system, as in either claim 9 or 10, to control the feed of charge material (210) into said furnace (100).

12. Apparatus (10) as in claim 11, **characterized in that** said supports (170) are disposed along a periphery of said furnace (100).

13. Apparatus (10) as in either claim 11 or 12, **characterized in that** it comprises a transport element (135) configured to transport and introduce said charge material (210) into said furnace (100).

14. Method to control the feed of charge material (210) into an electric arc furnace (100) during a melting sequence carried out with an automatic control system as in either claim 9 or 10, **characterized in that** it comprises the following steps:
- determining, at different instants of time, a plurality of weight values of said furnace (100), of its content, and of every element installed in or on said furnace (100) by means of said weighing elements (171);
- obtaining, by means of said processing unit (300), a value of total energy supplied to a bath (200) defined by the molten charge material;
- controlling, on the basis of said total energy value and said weight values, by means of said processing unit (300), the quantity of charge material (210) to be introduced into said furnace (100) by means of a transport element (135) of said charge material (210).

15. Control method as in claim 14, **characterized in that** obtaining a value of total energy supplied to said bath (200) comprises obtaining said total energy value on the basis of a value of electric power supplied to one or more electrodes (150) and a value of chemical power generated by auxiliary elements, such as electrodes, burners, lances or tuyeres, during a melting sequence.

16. Control method as in either claim 14 or 15, **characterized in that** controlling the quantity of charge material (210) to be introduced into said furnace (100) comprises controlling a speed of said transport element (135), this being a conveyor belt, by means of said processing unit (300).

## Patentansprüche

1. Wiegevorrichtung, die dazu ausgebildet ist, in einen auf einer horizontal schwenkbaren Plattform (160) ruhenden Lichtbogenofen (100) zugeführtes Einsatzmaterial (210) zu wiegen, wobei die Wiegevorrichtung eine Vielzahl von Stützen (170) umfasst, die jeweils eine obere Platte (172a), eine untere Platte (172b), die während des Gebrauchs parallel zueinander angeordnet sind, und ein Wiegeelement (171), das in Kontakt mit und zwischen den beiden Platten (172a, 172b) angeordnet ist, umfassen, wobei das Wiegeelement (171) eine Säulenkraftmesszelle ist, und **dadurch gekennzeichnet, dass** jede Stütze (170) zwei Verbindungselemente (173) umfasst, die senkrecht zueinander sind und an einer Ebene liegen, die parallel zu der durch die obere (172a) und die untere Platte (172b) definierten Ebene ist, wobei jedes eine Zugstange (173c) aufweist, die mit mindestens einem oberen Anschluss (173a) zur Verbindung mit der oberen Platte (172a) und mit mindestens einem unteren Anschluss (173b) zur Verbindung mit der unteren Platte (172b) verbunden ist.

2. Wiegevorrichtung nach Anspruch 1, **dadurch gekennzeichnet, dass** die obere Platte (172a) dazu ausgebildet ist, den Ofen (100) zu berühren, und die untere Platte (172b) dazu ausgebildet ist, die den Ofen stützende horizontal schwenkbare Plattform (160) zu berühren.

3. Wiegevorrichtung nach Anspruch 1 oder 2, **dadurch gekennzeichnet, dass** sie mindestens drei Stützen (170) umfasst, die gleichmäßig zueinander verteilt sind.

4. Wiegevorrichtung nach einem der vorhergehenden Ansprüche, **dadurch gekennzeichnet, dass** jede Stütze (170) eine Kühlhülle (177) zur Steuerung der Temperatur eines zugehörigen Wiegeelements (171) umfasst.

5. Wiegevorrichtung nach einem der vorhergehenden Ansprüche, **dadurch gekennzeichnet, dass** das mindestens eine Wiegeelement (171) eine zentrale Stange (171a) umfasst, die dazu ausgebildet ist, zumindest einen Teil des Gewichts des Ofens (100), seines Inhalts und jedes in oder an dem Ofen (100) installierten Elements zu tragen.

6. Wiegevorrichtung nach Anspruch 5, **dadurch gekennzeichnet, dass** die zentrale Stange (171a) mindestens zwei Deformationssensoren umfasst.

7. Wiegevorrichtung nach Anspruch 5 oder 6, **dadurch gekennzeichnet, dass** die zentrale Stange (171a) an der unteren Platte (172b) befestigt ist.

8. Wiegevorrichtung nach Anspruch 5, sofern abhängig von Anspruch 4, **dadurch gekennzeichnet, dass** die Kühlhülle (177) eine hohle zylindrische Hülle ist, die die zentrale Stange (171a) zumindest teilweise umgibt und in der eine Kühlflüssigkeit (177c) zum Zirkulieren gebracht wird, die mittels einer Einlassdüse (177a) in die Kühlhülle (177) eingeleitet und mittels einer Auslassdüse (177b) aus der Kühlhülle (177) abgeführt wird.

9. Automatisches System zur Steuerung der Zufuhr von Einsatzmaterial (210) in einen Lichtbogenofen (100), der Elektroden (150) umfasst, **dadurch gekennzeichnet, dass** es umfasst:
- eine Wiegevorrichtung nach einem der vorhergehenden Ansprüche, die dazu ausgebildet ist, den Ofen (100), seinen Inhalt und jedes in oder an dem Ofen (100) installierte Element zu wiegen, wobei die Stützen (170) der Vielzahl von Stützen (170) zwischen dem Ofen (100) und einer horizontal schwenkbaren Plattform (160) angeordnet sind;
- eine Verarbeitungseinheit (300), die dazu ausgebildet ist, die Menge des Einsatzmaterials (210), mit dem der Ofen (100) zu beschicken ist, auf der Grundlage der von der Wiegevorrichtung empfangenen Informationen als eine Funktion eines Werts der in das Innere des Ofens zugeführten Energie zu steuern.

10. Automatisches System nach Anspruch 9, **dadurch gekennzeichnet, dass** der Wert der in das Innere des Ofens (100) zugeführten Energie der Kombination aus einem Wert der elektrischen Leistung, die den Elektroden (150) zugeführt wird, und einem Wert der chemischen Leistung entspricht, die einem Bad (200) aus geschmolzenem Metalleinsatz zugeführt und von Hilfselementen, wie Elektroden, Brennern, Lanzen oder Düsen, während eines Schmelzvorgangs erzeugt wird.

11. Vorrichtung (10), umfassend einen Lichtbogenofen (100), **dadurch gekennzeichnet, dass** sie ein automatisches System nach Anspruch 9 oder 10 zur Steuerung der Zufuhr von Einsatzmaterial (210) in den Ofen (100) umfasst.

12. Vorrichtung (10) nach Anspruch 11, **dadurch gekennzeichnet, dass** die Stützen (170) entlang eines Umfangs des Ofens (100) angeordnet sind.

13. Vorrichtung (10) nach Anspruch 11 oder 12, **dadurch gekennzeichnet, dass** sie ein Transportelement (135) umfasst, das dazu ausgebildet ist, das Einsatzmaterial (210) zu transportieren und in den Ofen (100) einzubringen.

14. Verfahren zur Steuerung der Zufuhr von Einsatzmaterial (210) in einen Lichtbogenofen (100) während eines Schmelzvorgangs, der mit einem automatischen Steuerungssystem nach Anspruch 9 oder 10 durchgeführt wird, **dadurch gekennzeichnet, dass** es die folgenden Schritte umfasst:
- Bestimmen, zu verschiedenen Zeitpunkten, einer Vielzahl von Gewichtswerten des Ofens (100), seines Inhalts und jedes in oder an dem Ofen (100) installierten Elements mittels der Wiegeelemente (171);
- Erhalten, mittels der Verarbeitungseinheit (300), eines Werts einer Gesamtenergie, die einem durch das geschmolzene Einsatzmaterial definierten Bad (200) zugeführt wird;
- Steuern, auf der Grundlage des Gesamtenergiewertes und der Gewichtswerte, und zwar mittels der Verarbeitungseinheit (300), der Menge des mittels eines Transportelements (135) für das Einsatzmaterial (210) in den Ofen (100) einzubringenden Einsatzmaterials (210).

15. Steuerungsverfahren nach Anspruch 14, **dadurch gekennzeichnet, dass** das Erhalten eines Werts der dem Bad (200) zugeführten Gesamtenergie das Erhalten dieses Gesamtenergiewertes auf der Grundlage eines Werts der einer oder mehreren Elektroden (150) zugeführten elektrischen Leistung und eines Werts der chemischen Leistung umfasst, die von Hilfselementen, wie Elektroden, Brennern, Lanzen oder Düsen, während eines Schmelzvorgangs erzeugt wird.

16. Steuerungsverfahren nach Anspruch 14 oder 15, **dadurch gekennzeichnet, dass** das Steuern der Menge des in den Ofen (100) einzubringenden Einsatzmaterials (210) das Steuern einer Geschwindigkeit des Transportelements (135), das ein Förderband ist, mittels der Verarbeitungseinheit (300) umfasst.

## Revendications

1. Dispositif de pesage configuré pour peser un matériau de charge (210) alimenté dans un four à arc électrique (100) reposant sur une plate-forme à pivotement horizontal (160), ledit dispositif de pesage comprenant une pluralité de supports (170), chacun comprenant une plaque supérieure (172a), une plaque inférieure (172b), qui sont disposées parallèlement l'une à l'autre pendant l'utilisation, et un élément de pesage (171) en contact avec et disposé entre lesdites deux plaques (172a, 172b), dans lequel ledit élément de pesage (171) est une cellule de charge de colonne, **et caractérisé en ce que** chaque support (170) comprend deux éléments de connexion (173) perpendiculaires l'un à l'autre et situés sur un plan parallèle à celui défini par lesdites plaques supérieure (172a) et inférieure (172b), chacun ayant un tirant (173c) relié à au moins une borne supérieure (173a) pour la connexion à la plaque supérieure (172a) et à au moins une borne inférieure (173b) pour la connexion à la plaque inférieure (172b).

2. Dispositif de pesage selon la revendication 1, **caractérisé en ce que** ladite plaque supérieure (172a) est configurée pour entrer en contact avec ledit four (100), et ladite plaque inférieure (172b) est configurée pour entrer en contact avec ladite plate-forme à pivotement horizontal (160) supportant ledit four.

3. Dispositif de pesage selon la revendication 1 ou 2, **caractérisé en ce qu'**il comprend au moins trois supports (170) uniformément répartis les uns par rapport aux autres.

4. Dispositif de pesage selon l'une quelconque des revendications précédentes, **caractérisé en ce que** chaque support (170) comprend une coque de refroidissement (177) pour commander la température d'un élément de pesage (171) associé.

5. Dispositif de pesage selon l'une quelconque des revendications précédentes, **caractérisé en ce que** ledit au moins un élément de pesage (171) comprend un tirant central (171a) configuré pour supporter au moins une partie du poids dudit four (100), de son contenu et de chaque élément installé dans ou sur ledit four (100).

6. Dispositif de pesage selon la revendication 5, **caractérisé en ce que** ledit tirant central (171a) comprend au moins deux capteurs de déformation.

7. Dispositif de pesage selon la revendication 5 ou 6, **caractérisé en ce que** ledit tirant central (171a) est fixé à ladite plaque inférieure (172b).

8. Dispositif de pesage selon la revendication 5 lorsqu'elle dépend de la revendication 4, **caractérisé en ce que** ladite coque de refroidissement (177) est une coque cylindrique creuse qui entoure au moins partiellement ledit tirant central (171a) et dans lequel un liquide de refroidissement (177c) est mis en circulation, qui est introduit dans ladite coque de refroidissement (177) au moyen d'une buse d'entrée (177a) et extrait de ladite coque de refroidissement (177) au moyen d'une buse de sortie (177b).

9. Système automatique pour commander l'alimentation en matériau de charge (210) dans un four à arc électrique (100) comprenant des électrodes (150), **caractérisé en ce qu'**il comprend :
- un dispositif de pesage selon l'une quelconque des revendications précédentes, configuré pour peser ledit four (100), son contenu et chaque élément installé dans ou sur ledit four (100), dans lequel les supports (170) de ladite pluralité de supports (170) sont interposés entre ledit four (100) et une plate-forme à pivotement horizontal (160) ;
- une unité de traitement (300) configurée pour commander la quantité de matériau de charge (210) avec laquelle alimenter ledit four (100), sur la base des informations reçues dudit dispositif de pesage, en fonction d'une valeur d'énergie délivrée à l'intérieur du four.

10. Système automatique selon la revendication 9, **caractérisé en ce que** ladite valeur d'énergie délivrée à l'intérieur du four (100) correspond à la combinaison entre une valeur de puissance électrique fournie auxdites électrodes (150) et une valeur de puissance chimique fournie à un bain (200) de charge de métal fondu et générée par des éléments auxiliaires, tels que des électrodes, des brûleurs, des lances ou des tuyères, au cours d'une séquence de fusion.

11. Appareil (10) comprenant un four à arc électrique (100), **caractérisé en ce qu'**il comprend un système automatique, selon la revendication 9 ou 10, pour commander l'alimentation en matériau de charge (210) dans ledit four (100).

12. Appareil (10) selon la revendication 11, **caractérisé en ce que** lesdits supports (170) sont disposés le long d'une périphérie dudit four (100).

13. Appareil (10) selon la revendication 11 ou 12, **caractérisé en ce qu'**il comprend un élément de transport (135) configuré pour transporter et introduire ledit matériau de charge (210) dans ledit four (100).

14. Procédé pour commander l'alimentation en matériau de charge (210) dans un four à arc électrique (100) au cours d'une séquence de fusion effectuée avec un système de commande automatique selon l'une quelconque des revendications 9 ou 10, **caractérisé en ce qu'**il comprend les étapes suivantes :
- déterminer, à différents instants, une pluralité de valeurs de poids dudit four (100), de son contenu et de chaque élément installé dans ou sur ledit four (100) au moyen desdits éléments de pesage (171) ;
- obtenir, au moyen de ladite unité de traitement (300), une valeur d'énergie totale fournie à un bain (200) définie par le matériau de charge fondu ;
- commander, sur la base de ladite valeur d'énergie totale et desdites valeurs de poids, au moyen de ladite unité de traitement (300), la quantité de matériau de charge (210) à introduire dans ledit four (100) au moyen d'un élément de transport (135) dudit matériau de charge (210).

15. Procédé de commande selon la revendication 14, **caractérisé en ce que** l'obtention d'une valeur d'énergie totale fournie audit bain (200) comprend l'obtention de ladite valeur d'énergie totale sur la base d'une valeur d'énergie électrique fournie à une ou plusieurs électrodes (150) et d'une valeur d'énergie chimique générée par des éléments auxiliaires, tels que des électrodes, des brûleurs, des lances ou des tuyères, au cours d'une séquence de fusion.

16. Procédé de commande selon la revendication 14 ou 15, **caractérisé en ce que** la commande de la quantité de matériau de charge (210) à introduire dans ledit four (100) comprend la commande d'une vitesse dudit élément de transport (135), qui est une bande transporteuse, au moyen de ladite unité de traitement (300).
